# EUROPÄISCHE PATENTSCHRIFT

(11) **EP 4 274 686 B1**
(45) Veröffentlichungstag und Bekanntmachung des Hinweises auf die Patenterteilung: **16.10.2024**
(21) Anmeldenummer: 22707697.3
(22) Anmeldetag: 22.02.2022
(51) Int. Cl.: B01L 9/00, B01L 7/00, B01L 7/02, F16M 11/38, B01F 33/452, B01F 35/90, B01F 35/92, G05D 23/19, H05B 1/02, B66F 7/06, F24C 7/08, F16M 11/04, F16M 11/24, F16M 11/18

(54) **MAGNETRÜHRER MIT HUBTISCH**
MAGNETIC STIRRER HAVING LIFTING TABLE
AGITATEUR MAGNÉTIQUE AYANT UNE TABLE ÉLÉVATRICE

(30) Priorität: 23.02.2021 DE 202021100897 U
(43) Veröffentlichungstag der Anmeldung: 15.11.2023
(73) Patentinhaber: Hans Heidolph GmbH, 93309 Kelheim (DE)
(72) Erfinder: DIL, Roman, 90552 Röthenbach an der Pegnitz (DE)
(74) Vertreter: Stolmár & Partner Patentanwälte PartG mbB
(86) Internationale Anmeldenummer: PCT/EP2022/054296
(87) Internationale Veröffentlichungsnummer: WO 2022/179993

(56) Entgegenhaltungen:
- WO-A1-2008/055998
- CN-U- 205 761 243
- US-A- 3 623 707
- US-A1- 2005 077 286
- US-A1- 2016 151 751

## Beschreibung

Die Erfindung betrifft eine Anordnung umfassend einen Magnetrührer mit einer Heizplatte und einer Kontrolleinheit zur Steuerung des Magnetrührers und einen Hubtisch mit einer Plattform, auf der der Magnetrührer aufsetzbar ist. US 2016/0151751 A1 offenbart einen Magnetrührer mit Heizplatte und US3623707 offenbart einen elektrisch gesteuerten Hubtisch.

Bei einem Magnetrührer handelt es sich um ein elektrisches Gerät, das im Labor dazu verwendet wird, Flüssigkeiten zu rühren. Bei beispielsweise Reflux-, Destillations- oder Sublimationsaufbauten befindet sich die jeweilige Flüssigkeit in einem Reaktionsglasgefäß, insbesondere einem Reaktionsglaskolben, das Teil eines Glasaufbaus mit einem an das Reaktionsglasgefäß anschließenden Laborkühler ist, wobei der Glasaufbau an einem Tischstativ oder an einem an der Rückwand eines Abzugs angeordneten Gitter befestigt ist. Das Reaktionsglasgefäß taucht dabei in ein auf die Heizplatte gestelltes Heizbad oder dergleichen ein. In dem Reaktionsglasgefäß befindet sich ein Magnet-Rührstab, mit dem die Flüssigkeit gerührt werden kann. Hierzu ist in dem Magnetrührer unterhalb der Heizplatte üblicherweise ein rotierend angetriebener Magnet vorgesehen, der ein entsprechend auf den Magnet-Rührstab wirkendes Magnetfeld erzeugt. Durch die Heizplatte kann die Flüssigkeit während des Rührens gleichzeitig geheizt werden. Anstelle eines Heizbades kann z.B. auch eine Heizkalotte oder ein Heizpilz verwendet werden.

Um eine komfortable Ankopplung der Flüssigkeit an die Energiezufuhr durch die Heizplatte und Trennung der Flüssigkeit von der Energiezufuhr zu gewährleisten, ist es bekannt, den Magnetrührer auf die Plattform eines manuell betätigbaren Hubtisches aufzusetzen. Der Magnetrührer und das darauf gestellte Heizbad können dann durch den Bediener über z.B. eine Handkurbel des Hubtisches hoch- und heruntergefahren werden, um das Reaktionsglasgefäß in das Heizbad einzutauchen oder aus dem Heizbad herauszunehmen. Allerdings birgt dies insbesondere bei Anwendungen mit erhöhter Gefährdung ein gewisses Sicherheitsrisiko.

Der Erfindung liegt die Aufgabe zugrunde, eine Möglichkeit anzugeben, das Sicherheitsrisiko bei Verwendung eines Magnetrührers für eine Anwendung mit einem Heizbad und einem Glasaufbau, wie es vorstehend beschrieben ist, zu minimieren.

Diese Aufgabe wird durch die Merkmale des Anspruchs 1 gelöst, und insbesondere dadurch, dass der Hubtisch einen Elektromotor aufweist, um die Plattform anzuheben und abzusenken, und dass zwischen dem Magnetrührer und dem Hubtisch eine drahtlose oder drahtgebundene Schnittstelle vorgesehen und die Kontrolleinheit dazu ausgebildet ist, den Elektromotor, insbesondere die Stromversorgung des Elektromotors, über die Schnittstelle zu steuern.

Erfindungsgemäß muss der Hubtisch nicht mehr manuell bedient werden, sondern das Anheben und Absenken des Hubtisches wird von der Kontrolleinheit gesteuert und erfolgt elektrisch. Ein versehentliches Umstoßen und Umkippen des Hubtisches und des darauf gestellten Heizbades aufgrund unsachgemäßer manueller Bedienung kann hierdurch verhindert werden. Darüber hinaus kann der Bediener bei einer automatischen Steuerung durch die Kontrolleinheit die bewegliche Frontscheibe des Abzugs geschlossen halten, so dass der Bediener bei einer Gefahrensituation wie einem Siedeverzug, einer unkontrollierten Reaktion oder einer Explosion vor spritzenden Flüssigkeiten und/oder Splittern geschützt ist.

Bevorzugt ist die Kontrolleinheit des Magnetrührers dazu ausgebildet ist, die Plattform des Hubtisches bei Ablauf einer vorgegebenen Zeit und/oder bei Über- oder Unterschreitung eines vorgegebenen Referenzwerts durch einen von einem Messfühler, insbesondere einem Temperaturfühler, erfassten Messwert automatisch abzusenken. Durch die Vorgabe einer Zeit, nach deren Ablauf die Plattform automatisch abgesenkt wird, kann erreicht werden, dass die Anwendung sicher rechtzeitig beendet wird, bevor es aufgrund einer zu langen Prozessdauer zu einer Gefährdung kommen kann. Zusätzlich oder alternativ kann die Plattform bei Auftreten eines kritischen Prozesszustandes, beispielsweise wenn eine zulässige Temperatur der in dem Reaktionsglasgefäß befindlichen Flüssigkeit oder der Heizbadflüssigkeit überschritten wird, schnell, d.h. ohne Zeitverlust, automatisch abgesenkt werden.

Der Messfühler kann Teil der beanspruchten Anordnung sein. Darüber hinaus kann ein weiterer Messfühler, insbesondere ein weiterer Temperaturfühler, vorgesehen sein, der Teil der Anordnung ist. Dann kann mit dem einen Messfühler die Temperatur der in dem Reaktionsglasgefäß befindlichen Flüssigkeit und mit dem anderen Messfühler die Temperatur der Heizbadflüssigkeit überwacht werden. Dabei kann vorgesehen sein, dass einer der beiden Messfühler, nämlich derjenige Messfühler, der in die Heizbadflüssigkeit eintaucht, an einer an der Plattform des Hubtisches oder an dem Magnetrührer befestigten Haltevorrichtung der Anordnung, insbesondere einer Haltestange, angebracht ist. Wenn die Plattform und damit das Heizbad abgesenkt wird, wird auch dieser Messfühler entsprechend mit abgesenkt, so dass dieser Messfühler auch weiterhin die Temperatur des Heizbades überwachen kann. Der Messfühler, der in die in dem Reaktionsglasgefäß befindliche Flüssigkeit eintaucht, ist vorzugsweise derart befestigt, dass er - wie auch der Glasaufbau - bei einem Anheben oder Absenken der Plattform nicht mitbewegt wird.

Nach einer Ausbildung der Erfindung wird die Schnittstelle durch Aufsetzen des Magnetrührers auf die Plattform des Hubtisches funktionsfähig. Die Anbindung des Elektromotors an die Kontrolleinheit des Magnetrührers erfolgt dann nach Art einer Dockingstation, d.h. durch einfaches Andocken des Magnetrührers an den Hubtisch. Ist der Magnetführer nicht auf die Plattform des Hubtisches aufgesetzt, kann der Elektromotor des Hubtisches nicht von der Kontrolleinheit des Magnetrührers gesteuert werden.

Beispielsweise kann die drahtgebundene Schnittstelle eine elektrische Steckverbindung, insbesondere mit einem Stecker, insbesondere einem Einbaustecker, und einer Buchse, insbesondere einer Einbaubuchse, umfassen. Dabei kann der Stecker hubtischseitig und die Buchse magnetrührerseitig vorgesehen sein, oder umgekehrt. Die drahtlose Schnittstelle kann zwei induktiv zusammenwirkende Spulen umfassen, von denen eine erste Spule magnetrührerseitig und eine zweite Spule hubtischseitig vorgesehen ist.

Nach einer bevorzugten Ausführungsform der Erfindung weist nur der Magnetrührer eine Stromversorgung, insbesondere ein Netzteil, auf, und der Elektromotor des Hubtisches wird über die Schnittstelle mit Strom versorgt. Der Hubtisch besitzt dann keine eigene Stromversorgung, insbesondere kein eigenes Netzteil. Hierdurch kann ein Kostenvorteil erreicht werden. Darüber hinaus können beide Geräte, der Magnetrührer und der Hubtisch bzw. der Elektromotor des Hubtisches, mit nur einem gemeinsamen Kabel angeschlossen werden, wobei durch die Reduzierung der Anzahl der Kabel die Unfallgefahr am Aufstellplatz der Anordnung verringert werden kann.

Darüber hinaus kann die Kontrolleinheit dazu ausgebildet sein, Daten wie beispielsweise eine obere und eine untere Endposition der Plattform über die Schnittstelle an den Hubtisch zu übertragen.

Vorzugsweise umfasst der Magnetrührer an seiner Unterseite mehrere Aufstellfüße, die bei auf die Plattform des Hubtisches aufgesetztem Magnetrührer in gegenförmige, an der Oberseite der Plattform ausgebildete Vertiefungen eingreifen. Hierdurch kann eine exakte Positionierung des Magnetrührers auf dem Hubtisch bzw. auf der Plattform des Hubtisches erreicht werden. Insbesondere können hierdurch die vorgenannten Stecker und Buchse oder erste Spule und zweite Spule positionsgenau zueinander angeordnet werden. Darüber hinaus erschwert der Formschluss zwischen den Aufstellfüßen und den Vertiefungen ein versehentliches Verschieben des Magnetrührers auf der Plattform des Hubtisches und damit ein versehentliches Herunterschieben des Magnetrührers von dem Hubtisch, so dass die Sicherheit der Anordnung erhöht werden kann.

Die Plattform des Hubtisches kann eine Adapterplatte umfassen und die Vertiefungen können in der Adapterplatte ausgebildet sein. Durch eine Adapterplatte kann ein Magnetrührer an voneinander verschiedene Hubtische oder ein Hubtisch kann an voneinander verschiedene Magnetrührer angepasst werden.

Nach einer weiteren Ausbildung der Erfindung weist der Hubtisch eine beim Anheben und Absenken der Plattform unbewegte Basis auf, an der eine Haltevorrichtung der Anordnung, insbesondere eine Haltestange, für einen Glasaufbau, insbesondere mit einem Reaktionsglaskolben für eine zu heizende Flüssigkeit, befestigt ist, wobei der Glasaufbau Teil der beanspruchten Anordnung sein kann. Wie eingangs beschrieben ist, ist es bekannt, den Glasaufbau an einem Tischstativ oder an einem an der Rückwand eines Abzugs vorhandenen Gitter zu befestigen. Durch die an der Basis des Hubtisches befestigte Haltevorrichtung kann das Tischstativ oder das an der Rückwand des Abzugs angeordnete Gitter eingespart werden. Darüber hinaus ergibt sich gegenüber der Verwendung eines ganz hinten im Abzug befindlichen Gitters der Vorteil der leichteren Erreichbarkeit und damit der besseren Bedienbarkeit.

Bevorzugt ist der Hubtisch als ein Scherenhubtisch mit der Plattform, der vorgenannten Basis und einer zwischen der Plattform und der Basis angeordneten Schere ausgebildet. Ein derartiger Hubtisch ist einerseits einfach und andererseits stabil realisierbar. Die Plattform, die Basis und die Schere können jeweils aus Blech und damit kostengünstig realisiert sein. Insbesondere weist die Schere zwei über Kreuz angeordnete Scherenhebel auf, die an ihren Mitten gelenkig miteinander verbunden sind, wobei die vier Enden der beiden Scherenhebel über zwei Festlager und zwei Loslager, insbesondere Kulissensteuerungen, an der Plattform und der Basis gelagert sind.

Der Hubtisch kann als Antrieb ein Schraubgetriebe mit einer axialfesten Gewindespindel und einer Gewindemutter umfassen, wobei die Gewindespindel von dem Elektromotor angetrieben wird und die Gewindemutter in den beiden Loslagern verschiebbar geführt ist. Ein derartiger Antrieb ist einfach umsetzbar und erlaubt eine genaue Einstellung der jeweils gewünschten Höhe der Plattform.

Bevorzugt sind der Elektromotor und das Schraubgetriebe an der Plattform des Hubtisches, insbesondere an der Unterseite der Plattform des Hubtisches, vorgesehen. Somit sind keine elektrischen Leitungen notwendig, die ansonsten zu der Basis des Hubtisches verlegt werden müssten. Außerdem kann die Gewindespindel zusätzlich mit einer Handkurbel, insbesondere einem Kurbelrad, versehen sein. Der Hubtisch kann damit auch manuell betätigt werden. Dies ist insbesondere dann von Vorteil, wenn der Elektromotor oder die Ansteuerung des Elektromotors defekt ist.

Weitere vorteilhafte Ausgestaltungen der Erfindung sind in den Unteransprüchen, der Figurenbeschreibung und der Zeichnung beschrieben.

Nicht beschränkende Ausführungsbeispiele der Erfindung sind in der Zeichnung dargestellt und werden nachfolgend beschrieben. Es zeigen,
- Fig. 1: eine erste erfindungsgemäße Anordnung mit einem Magnetrührer und einem Hubtisch in einer perspektivischen Ansicht,
- Fig. 2: den Hubtisch aus Fig. 1 in Einzeldarstellung in einer Seitenansicht,
- Fig. 3: ein Ausschnitt des Hubtisches aus Fig. 1 in Einzeldarstellung in einer perspektivischen Ansicht,
- Fig. 4: ein weiterer Hubtisch in einer perspektivischen Ansicht, und
- Fig. 5: eine zweite erfindungsgemäße Anordnung mit einem weiteren Magnetrührer und dem weiteren Hubtisch aus Fig. 4 in einer perspektivischen Ansicht.

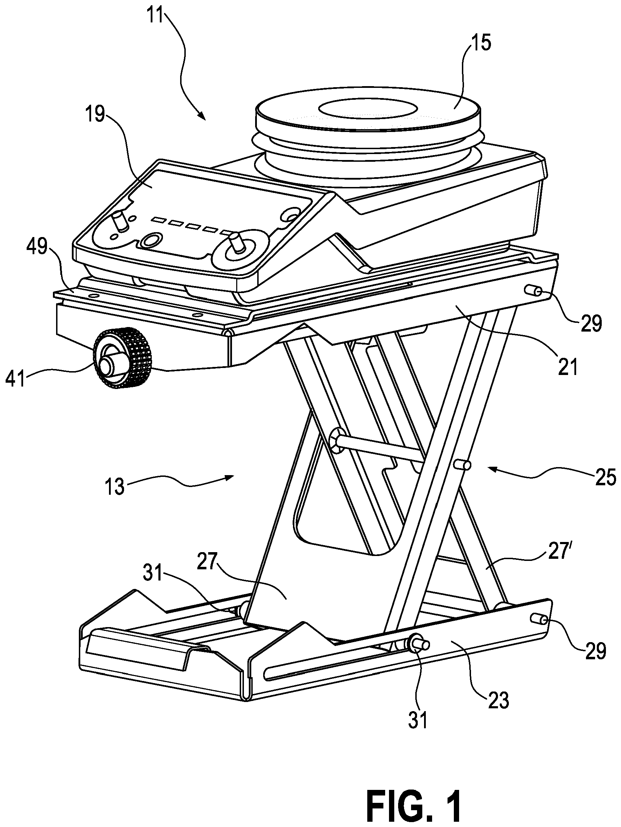

In Fig. 1 ist eine Anordnung gezeigt, bei der ein Magnetrührer 11 auf eine anheb- und absenkbare Plattform 21 eines Hubtisches 13 aufgesetzt ist.

Der Magnetrührer 11 umfasst eine Heizplatte 15, die von einer darin integrierten Heizeinrichtung beheizt wird und auf die ein nicht dargestelltes Heizbad gestellt werden kann, das mit einem flüssigen Wärmeübertragungsmedium wie Wasser gefüllt ist. In das Heizbad kann ein nicht dargestellter Reaktionsglaskolben eintauchen, in dem sich eine Flüssigkeit befindet, in der eine chemische Reaktion bei erhöhter Temperatur ablaufen soll, wie es bei Reflux-, Destillations- oder Sublimationsverfahren der Fall ist. Der Reaktionsglaskolben ist zusammen mit einem an das Reaktionsglasgefäß anschließenden Laborkühler Teil eines fest an einer Haltevorrichtung fixierten Glasaufbaus zur Durchführung der genannten Verfahren. Unterhalb der Heizplatte 15 ist in dem Magnetrührer 11 ein Antrieb in Form eines Elektromotors vorgesehen, der einen Magnet mit regelbarer Geschwindigkeit rotiert, so dass ein sich änderndes Magnetfeld erzeugt wird, das geeignet ist, einen in dem Reaktionsglaskolben befindlichen Magnet-Rührstab, der auch als Rührfisch bezeichnet wird, in eine Rührbewegung zu versetzen. Darüber hinaus umfasst der Magnetrührer 11 eine Benutzerschnittstelle 19, um die gewünschte Heiztemperatur und die gewünschte Rührgeschwindigkeit einzustellen. Die Eingaben an der Benutzerschnittstelle 19 werden an eine innerhalb des Magnetrührers 11 angeordnete, den Magnetrührer 11 steuernde Kontrolleinheit des Magnetrührers 11 weitergegeben.

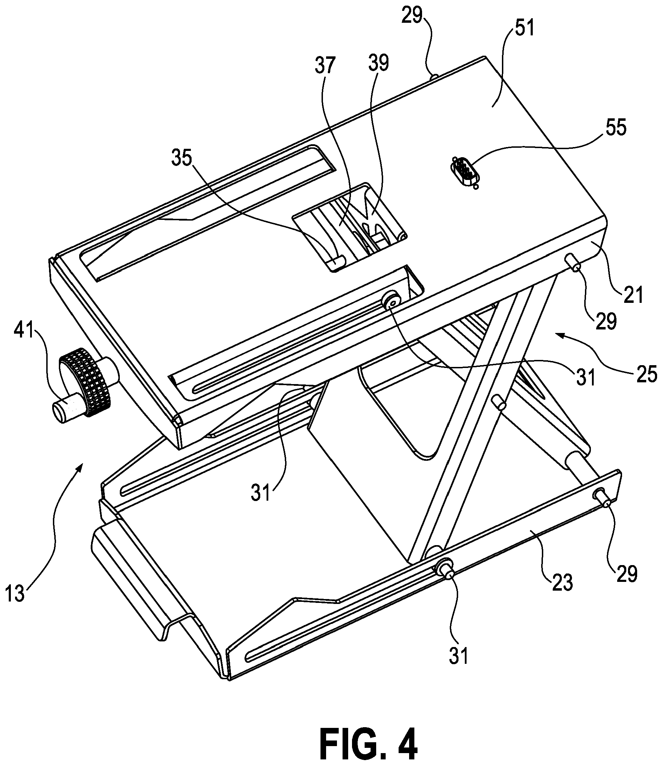

Durch den Hubtisch 13 können der Magnetrührer 11 und das Heizbad hoch- und heruntergefahren werden, um das Reaktionsglasgefäß in das Heizbad einzutauchen oder aus dem Heizbad herauszunehmen. Der Hubtisch 13 ist als ein Scherenhubtisch ausgebildet, der neben der Plattform 21 und einer beim Anheben und Absenken der Plattform unbewegten Basis 23 eine zwischen der Plattform 21 und der Basis 23 angeordnete Schere 25 umfasst. Die Schere 25 weist zwei über Kreuz angeordnete Scherenhebel 27, 27' auf, die an ihren Mitten gelenkig miteinander verbunden sind. Der eine Scherenhebel 27 ist mit einem Ende über ein Festlager 29 mit der Basis 23 und mit dem anderen Ende über ein Loslager 31 mit der Plattform 21 gelenkig verbunden, und der andere Scherenhebel 27' ist mit einem Ende über ein Festlager 29 mit der Plattform 21 und mit dem anderen Ende über ein Loslager 31 mit der Basis 23 gelenkig verbunden. Die beiden Festlager 29 umfassen jeweils zwei bezüglich der Scherenebene einander gegenüberliegende Festlagerstellen, an denen der jeweilige Scherenhebel 27, 27' an der Basis 23 bzw. der Plattform 21 angelenkt ist. Die beiden Loslager 31 umfassen jeweils zwei bezüglich der Scherenebene einander gegenüberliegende Kulissensteuerungen mit Längsschlitzen, in denen der jeweilige Scherenhebel 27, 27' an der Basis 23 bzw. der Plattform 21 verschiebbar geführt ist (vgl. hierzu auch Fig. 4).

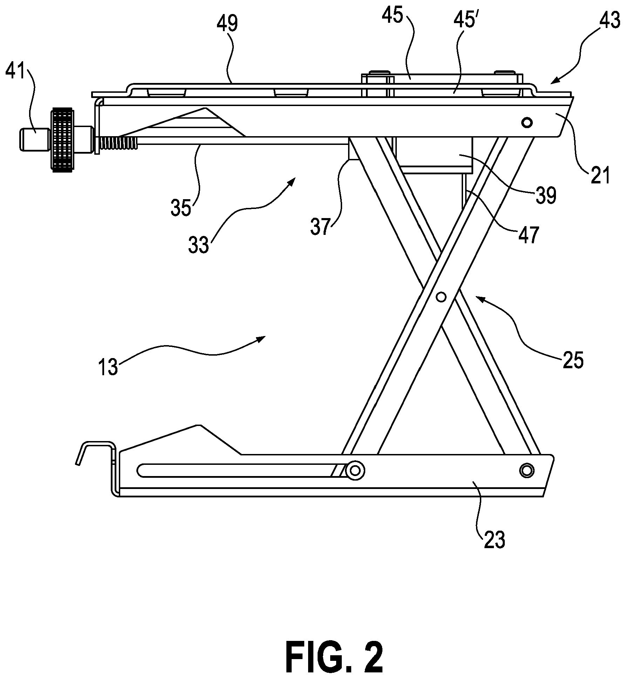

Der Anrieb des Hubtisches 13 bzw. das Anheben und Absenken der Plattform 21 erfolgt über ein Schraubgetriebe 33 (vgl. Fig. 2). Das Schraubgetriebe 33 umfasst eine axialfeste Gewindespindel 35, die von einem Elektromotor 39 angetrieben wird, und eine Gewindemutter 37, die in den beiden Loslagern 31 verschiebbar geführt ist. Der Elektromotor 39 und das Schraubgetriebe 33 sind an der Unterseite der Plattform 21 des Hubtisches 13 angeordnet. Der Hubtisch 13 kann neben der elektrischen Betätigung über den Elektromotor 39 zusätzlich auch noch manuell betätigt werden, und zwar über eine Handkurbel 41 in Form eines Kurbelrads.

Der Elektromotor 39 des Hubtisches 13 wird von der Kontrolleinheit des Magnetrührers 11 gesteuert. Hierzu ist zwischen dem Magnetrührer 11 bzw. der Kontrolleinheit des Magnetrührers 11 und dem Hubtisch 13 bzw. dem Elektromotor 39 des Hubtisches 13 eine drahtlose Schnittstelle 43 vorgesehen, die durch Aufsetzen des Magnetrührers 11 auf die Plattform 21 des Hubtisches 13 funktionsfähig wird. Die drahtlose Schnittstelle 43 umfasst zwei induktiv zusammenwirkende Spulen 45, 45,' nämlich eine erste Spule 45 und eine zweite Spule 45'. Die erste Spule 45 ist an der Unterseite des Magnetrührers 11 befestigt und mit der Stromversorgung des Magnetrührers 11 elektrisch verbunden, und die zweite Spule 45' ist an der Plattform 21 des Hubtisches 13 befestigt und mit dem Elektromotor 39 elektrisch verbunden. Zwischen der ersten Spule 45 und der zweiten Spule 45' ist ein kleiner Luftspalt, bevorzugt von wenigen Zehntelmillimeter bis wenigen Millimeter, ausgebildet.

Der Elektromotor 39 des Hubtisches 13 kann daher von dem Magnetrührer 11 über die drahtlose Schnittstelle 43 mit Strom versorgt werden, wobei die Stromversorgung für den Elektromotor 39 von der Kontrolleinheit des Magnetrührers 11 gesteuert wird, d.h. ein- und ausgeschaltet und umgepolt werden kann, um die Plattform 21 bedarfsweise anzuheben oder abzusenken. In der Anordnung besitzt also nur der Magnetrührer 11 eine Stromversorgung, insbesondere ein Netzteil. Der Hubtisch 13 bzw. der Elektromotor 39 des Hubtisches 13 besitzt keine eigene Stromversorgung, sondern nutzt die Stromversorgung des Magnetrührers 11. Über die drahtlose Schnittstelle 43 können auch Daten übertragen werden, beispielsweise eine obere und eine untere Endposition, die die Plattform 21 einnahmen kann. In den Fig. 2, 3 und 5 ist ein Kabel 47, das die zweite Spule 45' mit dem Elektromotor 39 verbindet, schematisch angedeutet.

Die Benutzerschnittstelle 19 des Magnetrührers 11 besitzt zwei nicht dargestellte Tasten, mit denen bei Betätigung die Plattform 21 des Hubtisches 13 angehoben bzw. abgesenkt werden kann. Darüber hinaus ist die Kontrolleinheit des Magnetrührers 11 dazu ausgebildet, die Plattform 21 des Hubtisches 13 automatisch abzusenken. Dies ist insbesondere dann der Fall, wenn im Betrieb der Anordnung eine vorgegebene Zeit abgelaufen ist oder wenn die in dem Reaktionsglaskolben befindliche Flüssigkeit oder das Heizbad zu heiß wird, d.h. wenn die Temperatur der in dem Reaktionsglaskolben befindlichen Flüssigkeit oder des Heizbades einen jeweiligen vorgegebenen Referenzwert übersteigt. Die Temperatur der in dem Reaktionsglaskolben befindlichen Flüssigkeit bzw. des Heizbades kann durch einen jeweiligen Temperaturfühler erfasst werden.

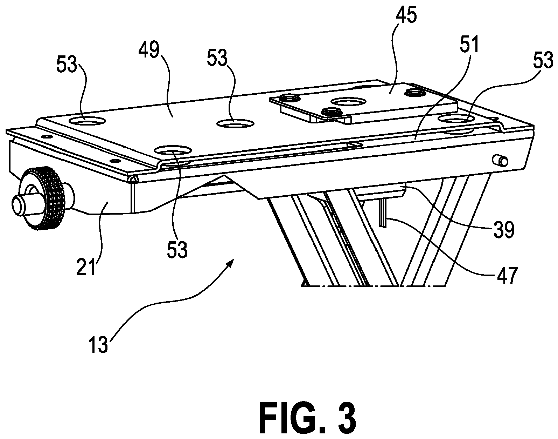

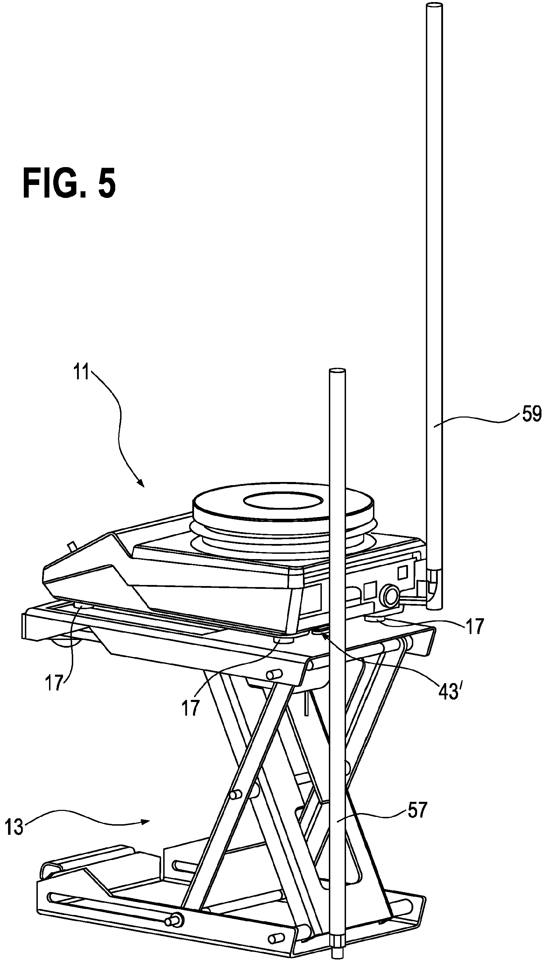

Wie insbesondere aus der Fig. 3 ersichtlich ist, weist die Plattform 21 des Hubtisches 13 eine Adapterplatte 49 auf, die auf einem Blechboden 51 der Plattform 21 befestigt ist und auf die der Magnetrührer 11 aufgesetzt wird. In der Adapterplatte 49 sind oberseitig mehrere Vertiefungen 53 vorgesehen, die gegenförmig zu an der Unterseite des Magnetrührers 11 vorgesehenen Aufstellfüßen 17 des Magnetrührers 11 (vgl. Fig. 5) ausgebildet sind. Dies erlaubt eine exakte Positionierung des Magnetrührers 11 auf dem Hubtisch 13 und sorgt für einen stabilen Sitz des Magnetrührers 11 auf dem Hubtisch 13. In den Fig. 2 und 3 ist auch noch die erste Spule 45 des Magnetrührers 11 eingeblendet, die von oben in eine entsprechend geformte Ausnehmung der Adapterplatte 51 für die beiden Spulen 45, 45' eingreift. Die in Fig. 3 nicht sichtbare zweite Spule 45' greift von unten in diese Ausnehmung der Adapterplatte 51 ein. Grundsätzlich kann die Adapterplatte 49 aber auch weggelassen werden und/oder können Vertiefungen für die Aufstellfüße 17 des Magnetrührers 11 in dem Blechboden 51 vorgesehen werden.

In Fig. 4 ist ein alternativer Hubtisch 13 dargestellt, der sich von dem Hubtisch gemäß den Fig. 1 bis 3 insbesondere dadurch unterscheidet, dass bei der Plattform 21 die Adapterplatte 49 weggelassen ist und anstelle der zweiten Spule 45' ein Einbaustecker 55 vorgesehen ist. Der Magnetrührer 11 besitzt dann an seiner Unterseite anstelle der ersten Spule 45 eine nicht dargestellte passende Einbaubuchse. Bei der Ausführungsform der Anordnung gemäß den Fig. 4 und 5 wird die drahtlose Schnittstelle 43 zwischen dem Magnetrührer 11 und dem Hubtisch 13 also durch eine drahtgebundene Schnittstelle 43' ersetzt. Grundsätzlich ist es auch bei der Ausführungsform gemäß den Fig. 4 und 5 möglich, dass eine Adapterplatte mit Vertiefungen für die Aufstellfüße 17 des Magnetrührers 11 vorgesehen wird oder dass Vertiefungen in dem Blechboden 51 vorgesehen werden.

Bei der Anordnung gemäß Fig. 5 ist angedeutet, dass an der Basis 23 des Hubtisches 13 eine erste Haltestange 57 angeordnet ist. An der ersten Haltestange 57 kann der Glasaufbau mit dem Reaktionsglaskolben und der Temperaturfühler für die in dem Reaktionsglaskolben befindlichen Flüssigkeit befestigt werden. Darüber hinaus ist aus Fig. 5 erkennbar, dass an dem Magnetrührer 11 eine zweite Haltestange 59 angeordnet ist, die alternativ jedoch auch an der Plattform 21 des Hubtisches 13 angeordnet sein kann. An der zweiten Haltestange 59 kann der Temperaturfühler für das Heizbad befestigt werden. Die beiden Haltestangen 57, 59 können jeweils einzeln oder gemeinsam auch bei der Anordnung gemäß den Fig. 1 bis 3 eingesetzt werden.

### Bezugszeichenliste

- 11: Magnetrührer
- 13: Hubtisch
- 15: Heizplatte
- 17: Aufstellfuß
- 19: Benutzerschnittstelle
- 21: Plattform
- 23: Basis
- 25: Schere
- 27: Scherenhebel
- 27': Scherenhebel
- 29: Festlager
- 31: Loslager
- 33: Schraubgetriebe
- 35: Gewindespindel
- 37: Gewindemutter
- 39: Elektromotor
- 41: Handkurbel
- 43: drahtlose Schnittstelle
- 43': drahtgebundene Schnittstelle
- 45: erste Spule
- 45': zweite Spule
- 47: Kabel
- 49: Adapterplatte
- 51: Blechboden
- 53: Vertiefung
- 55: Einbaustecker
- 57: erste Haltestange
- 59: zweite Haltestange

## Patentansprüche

1. Anordnung umfassend einen Magnetrührer (11) mit einer Heizplatte (15) und einer Kontrolleinheit zur Steuerung des Magnetrührers (11) und einen Hubtisch (13) mit einer Plattform (21), auf der der Magnetrührer (11) aufsetzbar ist,
**dadurch gekennzeichnet,**
**dass** der Hubtisch (13) einen Elektromotor (39) aufweist, um die Plattform (21) anzuheben und abzusenken, und
**dass** zwischen dem Magnetrührer (11) und dem Hubtisch (13) eine drahtlose oder drahtgebundene Schnittstelle (43, 43') vorgesehen und die Kontrolleinheit dazu ausgebildet ist, den Elektromotor (39), insbesondere die Stromversorgung des Elektromotors (39), über die Schnittstelle (43, 43') zu steuern.

2. Anordnung nach Anspruch 1,
**dadurch gekennzeichnet,**
**dass** die Kontrolleinheit des Magnetrührers (11) dazu ausgebildet ist, die Plattform (21) des Hubtisches (13) bei Ablauf einer vorgegebenen Zeit und/oder bei Über- oder Unterschreitung eines vorgegebenen Referenzwerts durch einen von einem Messfühler, insbesondere einem Temperaturfühler, der Teil der Anordnung ist, erfassten Messwert automatisch abzusenken.

3. Anordnung nach Anspruch 2,
**dadurch gekennzeichnet,**
**dass** der Messfühler Teil der Anordnung ist, wobei bevorzugt ein weiterer Messfühler, insbesondere ein weiterer Temperaturfühler, vorgesehen ist, der Teil der Anordnung ist, wobei vorzugsweise vorgesehen ist, dass einer der beiden Messfühler an einer an der Plattform (21) des Hubtisches (13) oder an dem Magnetrührer (11) befestigten Haltevorrichtung (59) der Anordnung, insbesondere einer Haltestange, angebracht ist.

4. Anordnung nach einem der vorstehenden Ansprüche,
**dadurch gekennzeichnet,**
**dass** die Schnittstelle (43, 43') durch Aufsetzen des Magnetrührers (11) auf die Plattform (21) des Hubtisches (13) funktionsfähig wird.

5. Anordnung nach einem der vorstehenden Ansprüche 1 bis 3,
**dadurch gekennzeichnet,**
**dass** die drahtgebundene Schnittstelle (43') eine elektrische Steckverbindung, insbesondere mit einem Stecker (55), insbesondere einem Einbaustecker, und einer Buchse, insbesondere einer Einbaubuchse, umfasst, wobei insbesondere der Stecker (55) hubtischseitig und die Buchse magnetrührerseitig vorgesehen ist, oder umgekehrt.

6. Anordnung nach einem der vorstehenden Ansprüche 1 bis 4,
**dadurch gekennzeichnet,**
**dass** die drahtlose Schnittstelle (43) zwei induktiv zusammenwirkende Spulen (45, 45') umfasst, von denen eine erste Spule (45) magnetrührerseitig und eine zweite Spule (45') hubtischseitig vorgesehen ist.

7. Anordnung nach einem der vorstehenden Ansprüche,
**dadurch gekennzeichnet,**
**dass** nur der Magnetrührer (11) eine Stromversorgung, insbesondere ein Netzteil, aufweist, und der Elektromotor (39) des Hubtisches (13) über die Schnittstelle (43, 43') mit Strom versorgt wird.

8. Anordnung nach einem der vorstehenden Ansprüche,
**dadurch gekennzeichnet,**
**dass** die Kontrolleinheit dazu ausgebildet ist, Daten über die Schnittstelle (43, 43') an den Hubtisch (13) zu übertragen.

9. Anordnung nach einem der vorstehenden Ansprüche,
**dadurch gekennzeichnet,**
**dass** der Magnetrührer (11) an seiner Unterseite mehrere Aufstellfüße (17) umfasst, die bei auf die Plattform (21) des Hubtisches (13) aufgesetztem Magnetrührer (11) in gegenförmige, an der Oberseite der Plattform (21) ausgebildete Vertiefungen (53) eingreifen.

10. Anordnung nach Anspruch 9,
**dadurch gekennzeichnet,**
**dass** die Plattform (21) des Hubtisches (13) eine Adapterplatte (49) umfasst und die Vertiefungen (53) in der Adapterplatte (49) ausgebildet sind.

11. Anordnung nach einem der vorstehenden Ansprüche,
**dadurch gekennzeichnet,**
**dass** der Hubtisch (13) eine beim Anheben und Absenken der Plattform (21) unbewegte Basis (23) aufweist, an der eine Haltevorrichtung (57) der Anordnung, insbesondere eine Haltestange, für einen Glasaufbau, insbesondere mit einem Reaktionsglaskolben für eine zu heizende Flüssigkeit, befestigt ist.

12. Anordnung nach Anspruch 11,
**dadurch gekennzeichnet,**
**dass** der Glasaufbau Teil der Anordnung ist.

13. Anordnung nach einem der vorstehenden Ansprüche,
**dadurch gekennzeichnet,**
**dass** der Hubtisch (13) als ein Scherenhubtisch mit der Plattform (21), einer beim Anheben und Absenken der Plattform (21) unbewegten Basis (23) und einer zwischen der Plattform (21) und der Basis (23) angeordneten Schere (25) ausgebildet ist, wobei insbesondere die Schere (25) zwei über Kreuz angeordnete Scherenhebel (27, 27') aufweist, die an ihren Mitten gelenkig miteinander verbunden sind, wobei die vier Enden der beiden Scherenhebel (27, 27') über zwei Festlager (29) und zwei Loslager (31), insbesondere Kulissensteuerungen, an der Plattform (21) und der Basis (23) gelagert sind.

14. Anordnung nach Anspruch 13,
**dadurch gekennzeichnet,**
**dass** der Hubtisch (13) als Antrieb ein Schraubgetriebe (33) mit einer axialfesten Gewindespindel (35) und einer Gewindemutter (37) umfasst, wobei die Gewindespindel (35) von dem Elektromotor (39) angetrieben wird und die Gewindemutter (37) in den beiden Loslagern (31) verschiebbar geführt ist.

15. Anordnung nach Anspruch 14,
**dadurch gekennzeichnet,**
**dass** der Elektromotor (39) und das Schraubgetriebe (33) an der Plattform (21) des Hubtisches (13), insbesondere an der Unterseite der Plattform (21) des Hubtisches (13), vorgesehen sind und/oder die Gewindespindel (35) zusätzlich mit einer Handkurbel (41), insbesondere einem Kurbelrad, versehen ist.

## Claims

1. Arrangement comprising a magnetic stirrer (11) having a heating plate (15) and a control unit for controlling the magnetic stirrer (11) and a lifting table (13) having a platform (21) on which the magnetic stirrer (11) can be fitted,
**characterized in that**
the lifting table (13) has an electric motor (39) for lifting and lowering the platform (21), and
**in that** a wireless or wired interface (43, 43') is provided between the magnetic stirrer (11) and the lifting table (13), and the control unit is designed to control the electric motor (39), in particular the power supply of the electric motor (39), via the interface (43, 43').

2. Arrangement according to claim 1,
**characterized in that**
the control unit of the magnetic stirrer (11) is designed to automatically lower the platform (21) of the lifting table (13) when a predetermined time has elapsed and/or when a measured value detected by a measuring sensor, in particular a temperature sensor that is part of the arrangement, exceeds or falls below a predetermined reference value.

3. Arrangement according to claim 2,
**characterized in that**
the measuring sensor is part of the arrangement, wherein a further measuring sensor, in particular a further temperature sensor, which is part of the arrangement, is preferably provided, wherein it is preferably provided that one of both measuring sensors is attached to a holding device (59) of the arrangement, in particular a holding rod, fixed to the platform (21) of the lifting table (13) or to the magnetic stirrer (11).

4. Arrangement according to one of the preceding claims
**characterized in that**
the interface (43, 43') becomes functional by fitting the magnetic stirrer (11) on the platform (21) of the lifting table (13).

5. Arrangement according to one of the preceding claims 1 to 3,
**characterized in that**
the wired interface (43') comprises an electrical plug connection, in particular having a plug (55), in particular a built-in plug, and a socket, in particular a built-in socket, wherein in particular the plug (55) is provided on the lifting table side and the socket is provided on the magnetic stirrer side, or vice versa.

6. Arrangement according to one of the preceding claims 1 to 4,
**characterized in that**
the wireless interface (43) comprises two inductively interacting coils (45, 45'), of which a first coil (45) is provided on the magnetic stirrer side and a second coil (45') is provided on the lifting table side.

7. Arrangement according to one of the preceding claims
**characterized in that**
only the magnetic stirrer (11) has a power supply, in particular a power supply unit, and the electric motor (39) of the lifting table (13) is supplied with power via the interface (43, 43').

8. Arrangement according to one of the preceding claims
**characterized in that**
the control unit is designed to transmit data to the lifting table (13) via the interface (43, 43').

9. Arrangement according to one of the preceding claims
**characterized in that**
the magnetic stirrer (11) comprises a plurality of mounting feet (17) on its underside, which engage in counter-shaped depressions (53) formed on the upper side of the platform (21) when the magnetic stirrer (11) is fitted on the platform (21) of the lifting table (13).

10. Arrangement according to claim 9,
**characterized in that**
the platform (21) of the lifting table (13) comprises an adapter plate (49) and the depressions (53) are formed in the adapter plate (49).

11. Arrangement according to one of the preceding claims
**characterized in that**
the lifting table (13) has a base (23) which is stationary when the platform (21) is lifted and lowered and to which a holding device (57) of the arrangement, in particular a holding rod, for a glass structure, in particular having a reaction glass bulb for a liquid to be heated, is fixed.

12. Arrangement according to claim 11,
**characterized in that**
the glass structure is part of the arrangement.

13. Arrangement according to one of the preceding claims
**characterized in that**
the lifting table (13) is designed as a scissor lifting table having the platform (21), a base (23) which is stationary when the platform (21) is lifted and lowered, and scissors (25) arranged between the platform (21) and the base (23), in particular the scissors (25) having two scissor levers (27, 27') which are arranged crosswise and are connected to one another in an articulated manner at their centres, the four ends of both scissor levers (27, 27') being mounted on the platform (21) and the base (23) via two fixed bearings (29) and two movable bearings (31), in particular slide control systems.

14. Arrangement according to claim 13,
**characterized in that**
the lifting table (13) comprises a helical gear (33) with an axially fixed threaded spindle (35) and a threaded nut (37) as a drive, wherein the threaded spindle (35) is driven by the electric motor (39) and the threaded nut (37) is displaceably guided in both movable bearings (31).

15. Arrangement according to claim 14,
**characterized in that**
the electric motor (39) and the helical gear (33) are provided on the platform (21) of the lifting table (13), in particular on the underside of the platform (21) of the lifting table (13), and/or the threaded spindle (35) is additionally provided with a hand crank (41), in particular a crankwheel.

## Revendications

1. Agencement comprenant un agitateur magnétique (11) avec une plaque chauffante (15) et une unité de contrôle pour commander l'agitateur magnétique (11) et une table élévatrice (13) avec une plateforme (21) sur laquelle l'agitateur magnétique (11) peut être placé,
**caractérisé en ce que**,
la table élévatrice (13) comporte un moteur électrique (39) pour soulever et abaisser la plateforme (21), et
qu'une interface (43, 43') sans fil ou filaire est prévue entre l'agitateur magnétique (11) et la table élévatrice (13) et que l'unité de contrôle est conçue pour commander le moteur électrique (39), en particulier l'alimentation électrique du moteur électrique (39), par l'intermédiaire de l'interface (43, 43').

2. Agencement selon la revendication 1,
**caractérisé en ce que**,
l'unité de contrôle de l'agitateur magnétique (11) est conçue pour abaisser automatiquement la plateforme (21) de la table élévatrice (13) à l'expiration d'un temps prédéfini et/ou en cas de dépassement vers le haut ou vers le bas d'une valeur de référence prédéfinie par une valeur de mesure détectée par un capteur de mesure, en particulier un capteur de température, qui fait partie de l'agencement.

3. Agencement selon la revendication 2,
**caractérisé en ce que**,
le capteur de mesure fait partie de l'agencement, de préférence un autre capteur de mesure, en particulier un autre capteur de température, étant prévu, qui fait partie de l'agencement, de préférence étant prévu que l'un des deux capteurs de mesure est monté sur un dispositif de maintien (59) de l'agencement, en particulier une barre de maintien, fixé à la plateforme (21) de la table élévatrice (13) ou à l'agitateur magnétique (11).

4. Agencement selon l'une quelconque des revendications précédentes,
**caractérisé en ce que**,
l'interface (43, 43') est rendue fonctionnelle par la mise en place de l'agitateur magnétique (11) sur la plateforme (21) de la table élévatrice (13).

5. Agencement selon l'une quelconque des revendications précédentes 1 à 3,
**caractérisé en ce que**,
l'interface filaire (43') comprend une connexion électrique enfichable, en particulier avec une fiche (55), en particulier une fiche encastrée, et une douille, en particulier une douille encastrée, la fiche (55) étant en particulier prévue du côté de la table élévatrice et la douille du côté de l'agitateur magnétique, ou inversement.

6. Agencement selon l'une quelconque des revendications précédentes 1 à 4,
**caractérisé en ce que**,
l'interface sans fil (43) comprend deux bobines (45, 45') coopérant par induction, dont une première bobine (45) est prévue du côté de l'agitateur magnétique et une seconde bobine (45') du côté de la table élévatrice.

7. Agencement selon l'une quelconque des revendications précédentes,
**caractérisé en ce que**,
seul l'agitateur magnétique (11) présente une alimentation électrique, en particulier un bloc d'alimentation, et que le moteur électrique (39) de la table élévatrice (13) est alimenté en courant par l'interface (43, 43').

8. Agencement selon l'une quelconque des revendications précédentes,
**caractérisé en ce que**,
l'unité de contrôle est conçue pour transmettre des données à la table élévatrice (13) par l'intermédiaire de l'interface (43, 43').

9. Agencement selon l'une quelconque des revendications précédentes,
**caractérisé en ce que**,
l'agitateur magnétique (11) comprend sur sa face inférieure plusieurs pieds de support (17) qui, lorsque l'agitateur magnétique (11) est posé sur la plateforme (21) de la table élévatrice (13), viennent en prise dans des renfoncements (53) de forme opposée, réalisés sur la face supérieure de la plateforme (21).

10. Agencement selon la revendication 9,
**caractérisé en ce que**,
la plateforme (21) de la table élévatrice (13) comprend une plaque d'adaptation (49) et les renfoncements (53) sont formés dans la plaque d'adaptation (49).

11. Agencement selon l'une quelconque des revendications précédentes,
**caractérisé en ce que**,
la table élévatrice (13) présente une base (23) immobile lors du levage et de l'abaissement de la plateforme (21), sur laquelle est fixé un dispositif de maintien (57) de l'agencement, en particulier une barre de maintien, pour une structure en verre, en particulier avec un ballon en verre de réaction pour un liquide à chauffer.

12. Agencement selon la revendication 11,
**caractérisé en ce que**,
la structure en verre fait partie de l'agencement.

13. Agencement selon l'une quelconque des revendications précédentes,
**caractérisé en ce que**,
la table élévatrice (13) est conçue comme une table élévatrice à ciseaux avec la plateforme (21), une base (23) immobile lors du levage et de l'abaissement de la plateforme (21) et une cisaille (25) disposée entre la plateforme (21) et la base (23), la cisaille (25) en particulier comportant deux leviers de ciseaux (27, 27') qui sont reliés entre eux de manière articulée au niveau de leurs centres, les quatre extrémités des deux leviers de ciseaux (27, 27') étant montées sur la plateforme (21) et la base (23) par l'intermédiaire de deux paliers fixes (29) et de deux paliers libres (31), en particulier des commandes à coulisse.

14. Agencement selon la revendication 13,
**caractérisé en ce que**,
la table élévatrice (13) comprend comme entraînement un engrenage à vis (33) avec une broche filetée (35) axialement fixe et un écrou fileté (37), la broche filetée (35) étant entraînée par le moteur électrique (39) et l'écrou fileté (37) étant guidé de manière déplaçable dans les deux paliers libres (31).

15. Agencement selon la revendication 14,
**caractérisé en ce que**,
le moteur électrique (39) et l'engrenage à vis (33) sont prévus sur la plateforme (21) de la table élévatrice (13), en particulier sur la face inférieure de la plateforme (21) de la table élévatrice (13), et/ou la broche filetée (35) est pourvue en outre d'une manivelle (41), en particulier d'une roue à manivelle.
